# FASCICULE DE BREVET EUROPEEN

(11) **EP 0 937 270 B1**
(45) Date de publication et mention de la délivrance du brevet: **25.08.2004**
(21) Numéro de dépôt: 97913243.8
(22) Date de dépôt: 04.11.1997
(51) Int. Cl.: G02B 6/44

(54) **CABLE DE TELECOMMUNICATION A FIBRES OPTIQUES**
OPTISCHES NACHRICHTENKABEL
TELECOMMUNICATION CABLE WITH OPTICAL FIBERS

(30) Priorité: 08.11.1996 FR 9613664
(43) Date de publication de la demande: 25.08.1999
(73) Titulaire: SAGEM SA, 75015 Paris (FR)
(72) Inventeur: CHERON, Philippe, F-75013 Paris (FR); JAMET, Patrick, F-75013 Paris (FR)
(74) Mandataire: Fruchard, Guy
(86) Numéro de dépôt international: PCT/FR1997/001971
(87) Numéro de publication internationale: WO 1998/021615

(56) Documents cités:
- EP-A- 0 067 724
- DE-A- 3 108 381
- DE-A- 3 200 760
- FR-A- 2 300 348
- FR-A- 2 321 133
- FR-A- 2 665 266
- US-A- 4 550 976
- US-A- 4 898 451
- US-A- 4 913 515
- PATENT ABSTRACTS OF JAPAN vol. 8, no. 183 (P-296) [1620] , 23 août 1984 & JP 59 074511 A (FURUKAWA DENKI KOGYO), 27 avril 1984,

## Description

La présente invention concerne un câble de télécommunication à fibres optiques.

D'une façon générale, un câble à fibres optiques comprend des fibres optiques disposées dans une enveloppe. On sait que pour assurer une bonne transmission de signaux il est généralement souhaitable de réduire au minimum les contraintes mécaniques auxquelles les fibres optiques sont soumises lors des manipulations du câble, en particulier lors de l'installation et de l'exploitation de celui-ci. C'est pour cette raison qu'il a été prévu pendant de nombreuses années d'associer les fibres optiques à un organe porteur de dimensions importantes , tel qu'un jonc central et/ou un tube rigide en assurant un découplage entre la structure du câble, en particulier l'organe porteur, et les fibres optiques afin que les efforts mécaniques (notamment les efforts de traction longitudinale ou de compression longitudinale) exercés sur le câble soient supportés par l'organe porteur. Des câbles de ce type sont décrits notamment dans les documents US 4,913,515 et 4,550,976.

Le découplage entre l'organe porteur et les fibres optiques peut être obtenu lors de la fabrication en prévoyant une surlongueur des fibres optiques par rapport à l'organe porteur, ou en interposant des couches à bas coefficient de frottement et des couches d'amortissement entre les fibres optiques et l'organe porteur. La réalisation de câbles de ces types est onéreuse et le câble obtenu présente un encombrement important par rapport au nombre de fibres optiques qu'il contient.

Afin de pallier ces inconvénients il a été proposé dans le document FR-A-2.665.266 de réaliser un câble à fibres optiques en assurant un couplage longitudinal entre les fibres optiques et l'enveloppe de sorte que les efforts mécaniques, par exemple les efforts de traction ou de compression, sont répartis entre l'enveloppe et les fibres optiques. Dans le mode de réalisation décrit dans ce document les fibres optiques sont divisées en modules chacun enveloppé dans une gaine de module en contact avec les fibres optiques, les différents modules étant regroupés dans une enveloppe en contact avec les gaines de modules afin d'assurer un couplage longitudinal avec celles-ci. Le couplage longitudinal décrit dans ce document correspond en pratique à une disposition des fibres optiques sans surlongueur par rapport à l'enveloppe, c'est-à-dire de façon telle qu'un allongement ou une compression de l'enveloppe entraîne un allongement ou une compression des fibres optiques.

L'effort qui est supporté par chaque fibre optique doit rester en-dessous d'un seuil au-delà duquel les propriétés de transmission de la fibre optique seraient altérées dans une proportion inacceptable par rapport aux performances requises. On comprend aisément que le câble ainsi réalisé peut supporter un effort d'autant plus grand que le nombre de fibres optiques est plus important.

Par ailleurs lorsque l'on souhaite fabriquer des câbles ayant des dimensions variées, il est nécessaire non seulement de disposer des outillages correspondants pour la réalisation des enveloppes mais également d'arrêter la ligne de fabrication pour effectuer un changement d'outillage. Pour des raisons de coût de fabrication, il est donc préférable de minimiser le nombre de câbles ayant des dimensions variées. En outre, le coût des fibres optiques entrant pour une très large part dans le coût d'un câble, il n'est pas souhaitable d'introduire dans un câble un grand nombre de fibres optiques à la seule fin de répartir les efforts sur celles-ci.

Selon l'invention on propose un câble de télécommunication comportant des fibres optiques disposées dans une enveloppe de façon à assurer un couplage mécanique longitudinal tel qu'un effort de traction ou de compression sur le câble est réparti entre les fibres optiques et l'enveloppe, caractérisé en ce qu'il comporte au moins une fibre de stabilisation ayant un diamètre sensiblement égal aux fibres optiques et des propriétés optiques de transmission inférieures à celles desdites fibres optiques, la fibre de stabilisation étant disposée dans l'enveloppe en assurant avec celle-ci un couplage mécanique longitudinal du même type que celui desdites fibres optiques de façon que les fibres de stabilisation soient substituées à des fibres optiques pour supporter une partie de l'effort de traction ou de compression.

Ainsi, pour un câble contenant un faible nombre de fibres optiques et ayant une enveloppe apte à contenir un nombre de fibres plus grand que le nombre de fibres optiques, l'espace laissé libre entre les fibres optiques est avantageusement utilisé pour recevoir des fibres de stabilisation qui supportent une partie des efforts auxquels le câble est soumis, de sorte qu'un câble de dimensions données est apte à supporter des efforts importants quel que soit le nombre de fibres optiques qu'il contient. A ce propos on notera que les fibres de stabilisation sont de très faible coût de sorte que pour un câble contenant un faible nombre de fibres optiques on réalise à un coût réduit un câble présentant les mêmes performances de résistance à la traction ou à la compression qu'un câble habituellement d'un coût beaucoup plus élevé. En outre, tant lors de la fabrication que lors de l'utilisation les fibres de stabilisation et les fibres optiques ont en raison de leur diamètre sensiblement égal des réactions mécaniques analogues facilitant la manipulation.

Selon un aspect avantageux de l'invention les fibres de stabilisation peuvent être sélectionnées pour avoir des propriétés de transmission voisines des fibres optiques. Ainsi, tout en étant d'un coût moins élevé les fibres de stabilisation peuvent être utilisées pour transmettre des signaux à faible définition ou sur de faibles distances.

Selon encore un autre aspect avantageux de l'invention en relation avec une enveloppe ayant un coefficient de dilatation thermique supérieur aux fibres optiques, les fibres de stabilisation ont un coefficient de dilatation thermique inférieur à l'enveloppe. Ainsi les fibres de stabilisation assurent une résistance à la dilatation ou à la rétraction de l'enveloppe et réduisent en conséquence les efforts auxquels les fibres optiques sont soumises du fait de la dilatation ou de la rétraction de l'enveloppe. De préférence les fibres de stabilisation ont un coefficient de dilatation thermique inférieur ou équivalent aux fibres optiques. Ainsi, la compensation du coefficient de dilatation de l'enveloppe se trouve encore améliorée et l'on peut même obtenir un coefficient de dilatation global de l'enveloppe et des fibres de stabilisation égal au coefficient de dilatation des fibres optiques ou peu différent de celui-ci de sorte que celles-ci ne sont sollicitées ni en traction ni en compression lors des variations de températures auxquelles le câble à fibres optiques est soumis.

Selon un autre aspect de l'invention, en relation avec un câble à fibres optiques comportant plusieurs modules comprenant chacun au moins une fibre optique enveloppée dans une gaine de module, le câble selon l'invention comporte plusieurs fibres de stabilisation réparties dans les modules. De préférence le câble comporte un nombre identique de fibres dans chaque module. Ainsi, on peut répartir les efforts de façon équilibrée sur les différents modules en prévoyant dans chaque module un nombre de fibres de stabilisation inversement proportionnel au nombre de fibres optiques dans le module.

Selon un autre aspect de l'invention également en relation avec un câble à plusieurs modules, les fibres de stabilisation sont groupées dans un même module. La fabrication des modules se trouve ainsi simplifiée.

D'autres caractéristiques et avantages de l'invention apparaîtront encore à la lecture de la description qui va suivre de trois modes de réalisation particuliers non limitatifs de l'invention, en référence aux figures ci-jointes parmi lesquelles:
- la figure 1 est une vue en coupe d'un premier mode de réalisation du câble de télécommunication selon l'invention,
- la figure 2 est une vue en coupe d'un second mode de réalisation du câble de télécommunication selon l'invention,
- la figure 3 est une vue en coupe d'un troisième mode de réalisation du câble de télécommunication selon l'invention.

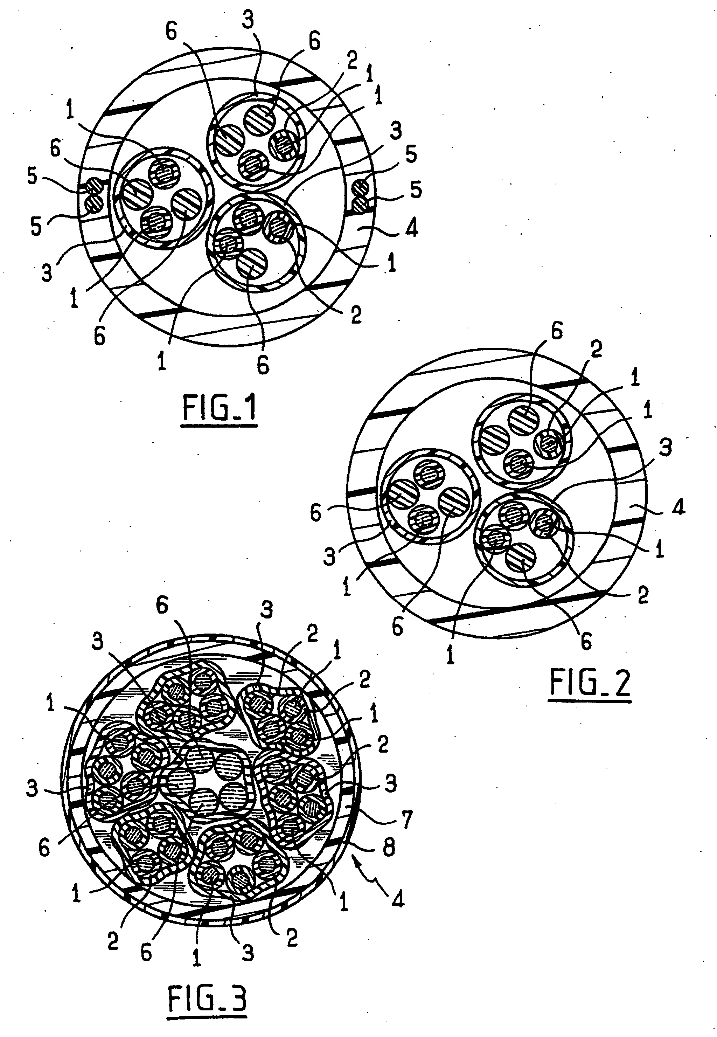

En référence à la figure 1, le câble de télécommunication selon l'invention comporte, dans le mode de réalisation illustré, une série de fibres optiques 1 chacune revêtue d'une couche d'identification colorée 2. Les fibres optiques sont divisées en modules qui, dans l'exemple illustré, comprennent deux ou trois fibres optiques. Chaque module est enveloppé d'une gaine de module 3 de faible épaisseur facilement déchirable, par exemple en polyéthylène, en polypropylène ou en polyamide de préférence extrudé sur un module de fibres simultanément au tirage et à l'assemblage des fibres.

Les gaines de module 3 sont de préférence colorées afin de distinguer les modules les uns des autres et l'épaisseur de la gaine varie de quelques millièmes de millimètre à quelques dixièmes de millimètre, de préférence entre un centième de millimètre et un dixième de millimètre. La faible épaisseur de la gaine de module 3 évite de soumettre les fibres 1 à des contraintes d'élongation et de compression lors des cycles thermiques et permet une réalisation économique.

L'ensemble des modules 3 est regroupé dans une enveloppe 4 de préférence constituée d'une couche extrudée en matériau à faible coefficient de dilatation, à faibles effets de relaxation et à forte résistance mécanique donnée par un module d'élasticité élevé, et renforcée par des organes de renforts 5 de préférence disposés selon deux paires de fibres tangentes diamétralement opposées. Les organes de renfort 5 ont de préférence un coefficient de dilatation thermique inférieur à celui de la matière formant l'enveloppe 4. Les organes de renfort 5 sont par exemple des fibres de verre, des fibres de carbone ou des fibres d'aramide rigidifiées ou non, ces dernières présentant un coefficient de dilatation thermique légèrement négatif qui favorise une compensation du coefficient de dilatation de la matière constituant l'enveloppe 4.

Des fibres de stabilisation 6 sont en outre disposées dans les modules. Dans le mode de réalisation de la figure 1 les fibres de stabilisation 6 sont en nombre suffisant pour que le nombre total de fibres dans chaque module, c'est-à-dire les fibres optiques et les fibres de stabilisation, soit égal à quatre. Les fibres de stabilisation ont un diamètre sensiblement égal aux fibres optiques et ont des propriétés mécaniques voisines des fibres optiques. Lorsque l'enveloppe 4 a un coefficient de dilatation thermique supérieur aux fibres optiques 1, les fibres de stabilisation 6 ont de préférence un coefficient de dilatation thermique inférieur à celui de l'enveloppe 4 ou même inférieur à celui des fibres optiques afin d'exercer une résistance aux variations de longueur de l'enveloppe si possible pour que le coefficient thermique global résultant de l'enveloppe et des fibres de stabilisation soit sensiblement égal à celui des fibres optiques. A cet effet, les fibres de stabilisation sont de préférence des fibres de verre, des fibres de carbone ou des fibres d'aramide.

Les fibres optiques 1 et les fibres de stabilisation 6 sont disposées de façon à assurer un couplage longitudinal avec l'enveloppe 4. Dans le mode de réalisation de la figure 1, le couplage longitudinal entre les fibres et l'enveloppe 4 est obtenu en disposant les fibres sans surlongueur dans l'enveloppe 4 de sorte qu'une variation de longueur de l'enveloppe 4 en traction ou en compression entraîne une répartition des contraintes dans le même sens sur l'ensemble des fibres.

La figure 2 illustre un second mode de réalisation qui se distingue du premier mode de réalisation par le seul fait que l'enveloppe 4 ne comporte pas d'organe de renfort. Ce mode de réalisation est particulièrement adapté à un câble comportant un grand nombre de fibres optiques 1 et/ou de fibres de stabilisation 6 ou soumis à un faible effort.

La figure 3 illustre un troisième mode de réalisation du câble selon l'invention dans lequel les éléments identiques ont été désignés par des références numériques identiques. Dans ce mode de réalisation l'enveloppe 4 comporte une couche extrudée 7 en matériau à faible coefficient de dilatation, à faibles effets de relaxation et à forte résistance mécanique, recouverte par une seconde couche 8 dont le rôle est d'assurer la présentation finale du câble, sa résistance à l'abrasion, et à abaisser son coefficient de frottement pour minimiser les efforts au moment de la pose dans un conduit tubulaire.

Dans ce mode de réalisation, les fibres de stabilisation 6 sont regroupées au sein d'un seul module enveloppé dans une gaine de module 3 et le couplage longitudinal est ici assuré en mettant d'une part les fibres en contact les unes avec les autres au sein d'un module et en mettant l'enveloppe 4 au contact avec les modules afin d'enserrer légèrement ceux-ci sans les contraindre.

On remarquera que du fait de leur diamètre sensiblement égal à celui des fibres optiques et du fait de leurs propriétés physiques voisines des fibres optiques les fibres de stabilisation et les fibres optiques sont totalement interchangeables de sorte qu'un même outillage et une même ligne de fabrication peuvent être utilisés pour réaliser des câbles présentant des nombres variés de fibres optiques tout en ayant les mêmes performances mécaniques et donc les mêmes performances de transmission pour chaque fibre optique.

Bien entendu l'invention n'est pas limitée aux modes de réalisation décrits et on peut y apporter des variantes de réalisation sans sortir du cadre de l'invention tel que défini par les revendications.

En particulier, bien que l'invention ait été décrite en relation avec des câbles dont les fibres optiques sont réparties selon les modules, on peut réaliser l'invention en disposant directement les fibres optiques 1 et les fibres de stabilisation 6 dans une enveloppe 4 ou encore de disposer les fibres de stabilisation à l'extérieur des modules contenant les fibres optiques.

On peut également prévoir de renforcer l'enveloppe 4 par une ou plusieurs couches de mèches de verre ou de mèches d'aramide afin d'augmenter la résistance mécanique du câble tout en conservant un coefficient de frottement faible par le choix d'une couche externe appropriée.

## Revendications

1. Câble de télécommunication comportant des fibres optiques (1) disposées dans une enveloppe (4) ayant une résistance mécanique suffisamment forte pour assurer entre l'enveloppe et les fibres optiques un couplage mécanique longitudinal tel qu'un effort de traction ou de compression sur le câble est réparti entre les fibres optiques et l'enveloppe, **caractérisé en ce qu'**il comporte au moins une fibre de stabilisation (6) ayant un diamètre sensiblement égal aux fibres optiques et des propriétés optiques de transmission inférieures à celles desdites fibres optiques, la fibre de stabilisation (6) étant disposée dans l'enveloppe (4) en assurant avec celle-ci un couplage mécanique longitudinal du même type que celui desdites fibres optiques de façon que les fibres de stabilisation soient substituées à des fibres optiques pour supporter une partie de l'effort de traction ou de compression.

2. Câble de télécommunication selon la revendication 1, **caractérisé en ce que** la fibre de stabilisation a des propriétés mécaniques voisines des fibres optiques.

3. Câble de télécommunication selon la revendication 1, **caractérisé en ce que** la fibre de stabilisation a des propriétés de transmission voisines des fibres optiques.

4. Câble de télécommunication selon la revendication 1, dans lequel l'enveloppe (4) a un coefficient de dilatation thermique supérieur aux fibres optiques (1), **caractérisé en ce que** la fibre de stabilisation (6) a un coefficient de dilatation thermique inférieur à l'enveloppe (4).

5. Câble de télécommunication selon la revendication 4, **caractérisé en ce que** la fibre de stabilisation (6) a un coefficient de dilatation thermique inférieur ou équivalent aux fibres optiques (1).

6. Câble de télécommunication selon la revendication 5, **caractérisé en ce que** le coefficient global de l'enveloppe et des fibres de stabilisation est sensiblement égal au coefficient de dilatation des fibres optiques.

7. Câble de télécommunication selon la revendication 1, **caractérisé en ce que** l'enveloppe (4) contient plusieurs modules comprenant chacun au moins une fibre optique (1) enveloppée dans une gaine de module (3), et **en ce que** plusieurs fibres de stabilisation (6) sont réparties dans les modules.

8. Câble de télécommunication selon la revendication 7, **caractérisé en ce qu'**il comporte un nombre identique de fibres (1, 6) dans chaque module.

9. Câble de télécommunication selon la revendication 1, **caractérisé en ce que** l'enveloppe (4) contient plusieurs modules comprenant chacun au moins une fibre optique (1) enveloppée dans une gaine de module, et **en ce que** plusieurs fibres de stabilisation (6) sont groupées au sein d'un même module.

10. Câble de télécommunication selon la revendication 9, **caractérisé en ce qu'**il comporte un module ne comportant que des fibres de stabilisation (6).

## Patentansprüche

1. Telekommunikationskabel umfassend Lichtleitfasern (1), die in einer Umhüllung (4) angeordnet sind, die eine ausreichend starke mechanische Festigkeit hat, um zwischen der Umhüllung und den Lichtleitfasern eine mechanische Kopplung in Längsrichtung derart sicherzustellen, daß eine Zug- oder Druckbeanspruchung des Kabels auf die Lichtleitfasern und die Umhüllung verteilt wird, **dadurch gekennzeichnet, daß** das Kabel zumindest eine Stabilisierungsfaser (6) umfaßt, die einen im wesentlichen den Lichtleitfasern entsprechenden Durchmesser hat und deren optische Übertragungsfähigkeit geringer ist als die der Lichtleitfasern, wobei die Stabilisierungsfaser (6) derart in der Umhüllung (4) angeordnet ist, daß mit dieser eine mechanische Kopplung in Längsrichtung nach Art der Kopplung mit den Lichtleitfasern sichergestellt ist, so daß die Stabilisierungsfasern an die Stelle der Lichtleitfasern treten, um einen Teil der Zugbeanspruchung oder der Druckkraft aufzunehmen.

2. Telekommunikationskabel nach Anspruch 1, **dadurch gekennzeichnet, daß** die Stabilisierungsfaser ähnliche mechanische Eigenschaften wie die Lichtleitfasern aufweist.

3. Telekommunikationskabel nach Anspruch 1, **dadurch gekennzeichnet, daß** die Stabilisierungsfaser ähnliche Übertragungseigenschaften wie die Lichtleitfasern aufweist.

4. Telekommunikationskabel nach Anspruch 1, wobei die Umhüllung (4) einen höheren Wärmeausdehnungskoeffizienten als die Lichtleitleitfasern (1) hat, **dadurch gekennzeichnet, daß** die Stabilisierungsfaser (6) einen geringeren Wärmeausdehnungskoeffizienten als die Umhüllung (4) hat.

5. Telekommunikationskabel nach Anspruch 4, wobei der Wärmeausdehnungskoeffizient der Stabilisierungsfaser (6) kleiner oder gleich dem Wärmeausdehnungskoeffizienten der Lichtleitfasern (1) ist.

6. Telekommunikationskabel nach Anspruch 5, **dadurch gekennzeichnet, daß** der Gesamtkoeffizient der Umhüllung und der Stabilisierungsfasern im wesentlichen gleich dem Ausdehnungskoeffizienten der Lichtleitfasern ist.

7. Telekommunikationskabel nach Anspruch 1, **dadurch gekennzeichnet, daß** die Umhüllung (4) mehrere Module umfaßt, von denen jedes zumindest eine Lichtleitfaser (1) hat, die von einer das Modul umschließenden Hülle (3) umgeben ist, und daß mehrere Stabilisierungsfasern (6) auf die Module verteilt sind.

8. Telekommunikationskabel nach Anspruch 7, **dadurch gekennzeichnet, daß** in jedem Modul des Kabels mehrere identische Fasern (1, 6) enthalten sind.

9. Telekommunikationskabel nach Anspruch 1, **dadurch gekennzeichnet, daß** die Umhüllung (4) mehrere Module umfaßt, von denen jedes zumindest eine Lichtleitfaser (1) umfaßt, die von einer das Modul umschließenden Hülle umgeben ist, und daß mehrere Stabilisierungsfasern (6) innerhalb desselben Moduls angeordnet sind.

10. Telekommunikationskabel nach Anspruch 9, **dadurch gekennzeichnet, daß** es ein Modul umfaßt, das nur Stabilisierungsfasern (6) enthält.

## Claims

1. A telecommunications cable comprising optical fibers (1) disposed in an envelope (4) in such a manner as to ensure therewith a longitudinal coupling such that an effort in traction or compression on the cable is shared between the optical fibers and the envelope, **characterized in that**, it includes at least one stabilization fiber (6) having a diameter substantially equal to the optical fibers, and optical transmission properties lower than those of the optical fibers, said stabilization fiber (6) being disposed in the envelope (4) in such a manner as to ensure therewith a longitudinal coupling of the same type as the one of said optical fibers so that the stabilization fibers are substituted to optical fibers for withstanding a portion of the traction or compression effort.

2. A telecommunications cable according to claim 1, wherein the stabilization fiber has mechanical properties similar to those of the optical fibers.

3. A telecommunications cable according to claim 1, wherein the stabilization fiber has transmission properties similar to those of the optical fibers.

4. A telecommunications cable according to claim 1, in which the envelope (4) has a coefficient of thermal expansion greater than that of the optical fibers (1), wherein the stabilization fiber (6) has a coefficient of thermal expansion lower than that of the envelope (4).

5. A telecommunications cable according to claim 4, wherein the stabilization fiber (6) has a coefficient of thermal expansion lower than or equivalent to that of the optical fibers (1).

6. A telecommunications cable according to claim 5, wherein the overall coefficient of the envelope plus the stabilization fibers is substantially equal to the expansion coefficient of the optical fibers.

7. A telecommunications cable according to claim 1, wherein the envelope (4) includes a plurality of modules, each comprising at least one optical fiber (1) enveloped in a module sheath (3), the cable including a plurality of stabilization fibers (6) distributed amongst the modules.

8. A telecommunications cable according to claim 7, wherein each module contains an identical number of fibers (1, 6).

9. A telecommunications cable according to claim 1, wherein the envelope (4) includes a plurality of modules each comprising at least one optical fiber (1) enveloped in a module sheath, the cable including a plurality of stabilization fibers (6) grouped together within a common module.

10. A telecommunications cable according to claim 9, wherein the cable includes a module comprising stabilization fibers (6) only.
